**Europäisches Patentamt**

**European Patent Office**

**Office européen des brevets**

(11) Numéro de publication: **0 446 535 A1**

# (12) DEMANDE DE BREVET EUROPEEN

(21) Numéro de dépôt: **90400544.4**

(22) Date de dépôt: **27.02.90**

(51) Int. Cl.⁵: **A01B 33/08, A01B 33/02**

(43) Date de publication de la demande:
**18.09.91 Bulletin 91/38**

(84) Etats contractants désignés:
**CH DE ES IT LI NL**

(71) Demandeur: **ATELIERS DE CLAIRE FONTAINE**
**La Chapelle Basse Mer**
**F-44450 Saint-Julien De Concelles(FR)**

(72) Inventeur: **Simon, Gaston**
**Le Moulin de Claire Fontaine**
**F-44450 La Chapelle Basse Mer(FR)**

(74) Mandataire: **Phélip, Bruno et al**
**c/o Cabinet Harlé & Phélip 21, rue de La**
**Rochefoucauld**
**F-75009 Paris(FR)**

(54) **Appareil rotatif de travail du sol.**

㊗ L'appareil de travail du sol selon l'invention, comporte un châssis servant de support et de carter à un outil de fraisage (6) disposé en tête et à un tambour (7) ; les deux outils tournant en sens inverse autour d'axes (8) et (9) parallèles entre eux et perpendiculaires au sens d'avancement de l'appareil.

Les outils (6) et (7) sont entraînés en rotation par la brise de force du tracteur, par l'intermédiaire d'un dispositif renvoi d'angle (10) du type à une seule sortie (12) associé à des moyens d'entraînement constitués d'une chaîne fermée (15) qui engrène sur les roues dentées solidaires de l'outil de fraisage (6) et du tambour (7) ; la roue dentée (17) du tambour (7) étant située à l'extérieur de la chaîne.

L'appareil est plus particulièrement destiné à la préparation de planches de culture dans des exploitations de petite surface, tiré par un tracteur de faible puissance.

La présente invention concerne un appareil à outils rotatifs pour le travail du sol, plus particulièrement adapté à la préparation de planches de culture.

Un appareil de ce type est décrit, par exemple, dans le document FR-A-2 116 321. Cet appareil est constitué d'un châssis, portable par un tracteur ; le châssis supporte, à l'avant, un outil du type fraise qui tourne autour d'un axe horizontal perpendiculaire au sens d'avancement ; il supporte également, derrière l'outil de fraisage, un tambour rotatif centré sur un axe parallèle à celui de la fraise ; ce tambour est équipé de dents destinées à briser et pulvériser, derrière la fraise, les mottes de terre, et à égaliser le terrain.

Dans le document précité, l'outil de fraisage et le tambour à dents sont entraînés en rotation au moyen d'un dispositif renvoi d'angle branché sur la prise de force du tracteur ; ce renvoi d'angle comporte deux sorties décalées longitudinalement l'une par rapport à l'autre, lesquelles sorties actionnent respectivement l'outil de fraisage et le tambour.

Cette solution, d'un dispositif renvoi d'angle à deux sorties se justifie par le fait que les sens de rotation de l'outil de fraisage et du tambour sont inversés et par le fait que les puissances absorbées par l'un et l'autre des outils sont très différentes ; l'outil de fraisage absorbe la plus grande partie de la puissance.

Il est apparu que pour améliorer le fonctionnement de cet outil, il était possible, grâce à un entraînement distinct des deux outils, de faire varier les conditions de travail et en particulier de les adapter à la nature du terrain. Une machine de ce genre est décrite dans le document FR-A-2 593 347. L'appareil comporte une transmission du type à renvoi d'angle à une seule sortie, pour l'outil de fraisage et un moteur hydraulique pour l'entraînement du tambour à dents.

La présente invention a pour but de réduire le prix de revient de ce type d'appareil de travail du sol, par une simplification des moyens utilisés pour réaliser l'entraînement des deux outils.

L'appareil selon l'invention est plus particulièrement destiné à la préparation de planches de culture dans des exploitations où la surface cultivable est modeste. Par ailleurs, il est conçu pour être attelé à un tracteur dont la puissance est relativement faible, en rapport le plus souvent avec la taille de l'exploitation.

L'appareil présente ainsi l'avantage de comporter des composants mécaniques simples sans aucune perte sur le plan de l'efficacité et de la qualité du travail de la terre.

L'appareil selon l'invention comporte, pour l'entraînement des deux outils, un dispositif renvoi d'angle unique, du type à une seule sortie, laquelle sortie est associée à des moyens qui permettent l'entraînement simultané des deux outils. Ces moyens d'antraînement sont disposés sur l'un des côtés de l'appareil et sont constitués d'une chaîne fermée à maillons, qui engrène sur des roues dentées solidaires de la sortie du renvoi d'angle, de l'outil de fraisage et du tambour.

Toujours selon l'invention, la roue dentée du tambour se situe à l'extérieur de la chaîne fermée, pour permettre une rotation en sens inverse dudit tambour par rapport à l'outil de fraisage ; une roue folle, disposée à l'intérieur de la chaîne, entre la sortie du renvoi d'angle et le tambour, permet l'enroulement de ladite chaîne sur la roue dentée du tambour et notamment sur une portion de circonférence qui correspond sensiblement à 120°.

Toujours selon l'invention, le panneau latéral du châssis comporte, du côté de la transmission, au moins une nervure de rigidification disposée dans le carter de protection de ladite transmission.

Toujours selon l'invention, le panneau latéral du châssis comporte, extérieurement, autour de la partie basse du carter de protection de la transmission, un renfort extérieur de rigidification.

Selon une autre disposition de l'invention, la chaîne d'entraînement est maintenue tendue par un patin pivotant réglable interposé, à l'extérieur de la chaîne, entre la roue dentée de l'outil de fraisage et celle de la sortie du renvoi d'angle.

Selon une autre disposition de l'invention, l'appareil comporte, à l'arrière, un train de roues réglable, constitué d'un arceau de soutien des deux roues, lequel arceau surplombe la bande de terre travaillée et comporte deux bras de liaison articulés sur les panneaux latéraux du châssis ; l'arceau est solidaire du châssis au moyen d'un vérin à vis réglable qui permet de régler la profondeur de travail.

Toujours selon l'invention, l'appareil comporte, à la partie basse avant des panneaux latéraux du châssis, des patins d'usure qui s'étendent de la partie inférieure desdits panneaux jusqu'au niveau de l'axe de l'outil de fraisage.

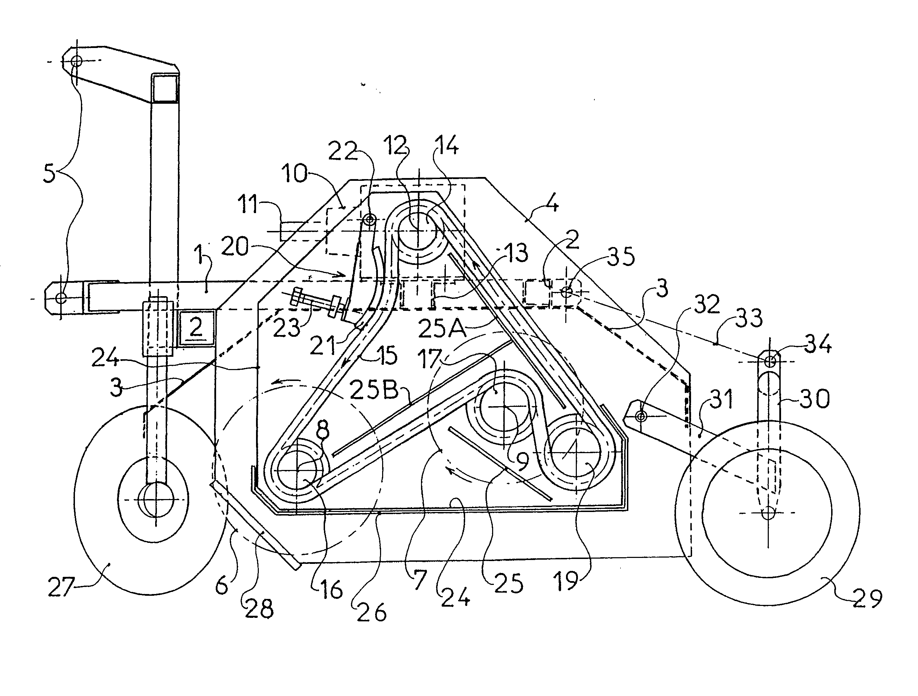

L'invention sera encore illustrée à l'aide de la description suivante et du dessin annexé montrant, à titre indicatif, en vue de côté, un appareil de travail du sol.

L'appareil représenté sur la figure est destiné à être attelé à l'arrière d'un tracteur, non représenté, sur un système d'attelage trois points classique. Cet appareil comporte un châssis constitué d'un assemblage de profilés réalisant les longerons 1 et traverses 2 sur lesquels est fixé un carter supérieur 3 qui enveloppe les deux outils de travail. Les outils de travail sont supportés et guidés, latéralement, par des panneaux 4 soudés sur le carter 3 et sur les traverses 2.

A l'avant de l'appareil, c'est-à-dire du côté des points d'attelage 5, on trouve l'outil de fraisage 6 qui tourne, sur la figure, dans le sens inverse des aiguilles d'une montre. Derrière l'outil de fraisage 6, on trouve le tambour 7 qui tourne lui, tel que représenté sur la figure, dans le sens des aiguilles d'une montre. Les axes de rotation 8 et 9 des deux outils sont parallèles entre eux et sont perpendiculaires au sens d'avancement de l'appareil. On remarque, sur la figure, que l'outil de fraisage 6 se situe à un niveau plus bas que le tambour 7.

L'entraînement des deux outils s'effectue au moyen d'un boîtier renvoi d'angle 10 dont l'arbre d'entrée 11 est connecté à la prise de force du tracteur non représenté. Ce renvoi d'angle 10 est du type à une seule sortie 12, latérale. Il est fixé par tout moyen approprié sensiblement au centre de l'appareil, sur le châssis et en particulier sur les longerons 1 par des traverses 13.

La sortie 12 du renvoi d'angle assure l'entraînement des deux outils 6 et 7 au moyen d'une roue dentée 14 et d'une chaîne 15 fermée, du type à maillons par exemple. La chaîne 15 comporte un brin tendu qui s'étend du pignon moteur 14 de la sortie du renvoi d'angle jusqu'à la roue dentée 16 de l'outil de fraisage en passant à l'extérieur de la roue dentée 17 du tambour et par une roue folle 19 qui permet de réaliser un enroulement dudit brin, sur la roue dentée 17. Le brin détendu de la chaîne 15 s'étend de la roue dentée 16 de l'outil de fraisage 6 jusqu'à la roue dentée motrice 14 de la sortie 12 du renvoi d'angle ; ce brin de retour est soumis à l'action d'un tendeur 20 constitué d'un patin 21 en forme d'arc de cercle articulé à l'une de ses extrémités autour d'un axe d'articulation 22 situé sensiblement au même niveau que l'axe de la roue dentée 14 ; le patin est soumis à son autre extrémité à une vis 23 de réglage.

La roue folle 19 est positionnée en arrière de la roue dentée 17 du tambour 7 et à un niveau inférieur, de façon à réaliser un enroulement du brin de chaîne correspondant sur une portion de circonférence au moins égale à 120°.

L'ensemble de la transmission est disposé d'un même côté de l'appareil, sur la face externe du panneau 4 formant l'un des côtés de l'appareil. Cette transmission est protégée par un carter 24 dont on a fait figurer sur le dessin, le contour seulement, de façon à montrer l'ensemble de la transmission.

A l'intérieur de ce carter 24, on trouve des nervures servant à renforcer le panneau latéral 4. Une première nervure 25 est disposée sous le brin tendu de la chaîne 15, de façon sensiblement parallèle au plan passant par les axes de la roue dentée 17 et de la roue folle 19.

Une seconde nervure 25a s'étend sous le brin de chaîne tendu entre les roues 14 et 19 et une troisième nervure 25b s'étend entre la nervure 25a et la roue 16 ; cette nervure 25b s'étend de façon sensiblement perpendiculaire à la nervure 25a et elles forment une structure en T.

On remarque encore sur la figure, un renfort de rigidification 26 qui s'étend sur tout le contour externe inférieur du carter de protection 24. Ce renfort 26 consiste en une bande de tôle préformée soudée à l'extérieur du panneau latéral 4. En avant de l'outil de fraisage 6, de chaque côté de l'appareil, on trouve un coutre concave 27, ajustable par tout moyen approprié, ce coutre 27 détermine la profondeur du passe-pied et il ouvre le passage pour les panneaux latéraux 4 de l'appareil et pour le carter 24 qui couvre les moyens d'entraînement des deux outils 6 et 7.

Chaque panneau latéral 4 comporte, dans sa partie basse avant, un sabot d'usure 28 en forme de tige cylindrique dont le diamètre est supérieur à l'épaisseur dudit panneau. Ce sabot 28 est soudé sur champ, faisant un angle de 45° environ avec l'horizontale et s'étendant depuis la partie basse du panneau 4 jusqu'à un niveau qui correspond sensiblement au niveau de l'axe 8 de l'outil de fraisage 6.

A l'arrière, de part et d'autre de l'appareil, on trouve un train de roues 29. Ces roues sont montées sur un arceau tubulaire 30 qui surplombe la bande de terre travaillée. Cet arceau 30 comporte deux bras latéraux 31 articulés à l'arrière des panneaux latéraux 4 de l'appareil sur des axes 32 situés sensiblement au niveau de l'axe 9 du tambour 7. L'ajustement de la hauteur de travail de l'appareil s'effectue par un réglage de ce train arrière. Le réglage s'effectue au moyen d'un vérin à vis représenté sous la forme d'un axe 33 ; ce vérin à vis est articulé sur un axe 34 disposé sur l'arceau 30 et sur un axe 35 disposé sur la traverse 2 à l'arrière de l'appareil.

Les signes de référence insérés après les caractéristiques techniques mentionnées dans les revendications ont pour seul but de faciliter la compréhension de ces dernières, et n'en limitent aucunement la portée.

**Revendications**

1. Appareil à outils rotatifs pour le travail du sol, du type comportant, sur un même châssis servant de support et de carter, un outil de fraisage (6) disposé en tête et un tambour (7) à dents, les deux outils tournant en sens inverse autour d'axes (8) et (9) horizontaux qui sont parallèles entre eux et perpendiculaires au sens d'avancement de l'appareil, lesquels outils (6) et (7) sont entraînés en rotation par la prise de force du tracteur, par l'intermédiaire d'un dispositif renvoi d'angle (10), caractérisé en ce que le dispositif renvoi d'angle (10) est du type à une seule sortie (12), laquelle sortie est associée à des moyens d'entraînement simultané des deux outils (6) et (7), lesquels moyens d'entraînement sont constitués d'une chaîne fermée (15) qui engrène sur des roues dentées solidaires de la sortie (12) du renvoi d'angle (10), de l'outil de fraisage (6) et du tambour (7).

2. Appareil à outils rotatifs pour le travail du sol, selon la revendication 1, caractérisé en ce qu'il comporte, à l'extérieur de la chaîne (15), la roue dentée (17) du tambour (7), pour permettre une rotation inversée dudit tambour (7) par rapport à l'outil de fraisage (6).

3. Appareil à outils rotatifs pour le travail du sol, selon la revendication 2, caractérisé en ce qu'il comporte une roue folle (19), disposée à l'intérieur de la chaîne (15), entre la sortie (12) du renvoi d'angle (10) et le tambour (7), permettant l'enroulement de ladite chaîne sur la roue dentée (17) du tambour (7).

4. Appareil à outils rotatifs pour le travail du sol, selon la revendication 3, caractérisé en ce que le panneau latéral (4) du châssis comporte, extérieurement, sous la chaîne (15), une nervure (25) de rigidification sensiblement parallèle au plan passant par les axes de la roue folle (19) et du tambour (7).

5. Appareil à outils rotatifs pour le travail du sol, selon l'une quelconque des revendications 3 ou 4, caractérisé en ce que le panneau latéral (4) comporte, extérieurement, une nervure de rigidification (25a) qui s'étend sous le brin de chaîne tendu entre la roue (14) et la roue (19).

6. Appareil à outils rotatifs pour le travail du sol, selon l'une quelconque des revendications 3 à 5, caractérisé en ce que le panneau latéral (4) comporte, extérieurement, une nervure de rigidification (25b) qui s'étend entre la nervures (25a) et la roue (16), formant avec ladite nervure (25a) une structure en T.

7. Appareil à outils rotatifs pour le travail du sol, selon l'une quelconque des revendications 1 à 6, caractérisé en ce que le panneau latéral (4) du châssis comporte, extérieurement, autour de la partie basse du carter (24) de protection de la transmission, un renfort extérieur (26) de rigidification.

8. Appareil à outils rotatifs pour le travail du sol, selon l'une quelconque des revendications 1 à 7, caractérisé en ce que la chaîne d'entraînement (15) est maintenue tendue au moyen d'un patin pivotant (20) réglable, interposé, à l'extérieur de la chaîne (15), entre la roue dentée (16) de l'outil de fraisage (6) et la roue dentée (14) de la sortie (12) du renvoi d'angle (10).

9. Appareil à outils rotatifs pour le travail du sol, selon l'une quelconque des revendications 1 à 8, caractérisé en ce qu'il comporte, à l'arrière, un train de roues (29) disposé latéralement et constitué d'un arceau (30) de soutien desdites roues, lequel arceau (30) surplombe la bande de terre travaillée et comporte deux bras de liaison (31) articulés sur les panneaux latéraux (4) du châssis.

10. Appareil à outils rotatifs pour le travail du sol, selon la revendication 9, caractérisé en ce qu'il comporte, interposé entre le châssis et l'arceau (30) de soutien des roues (29), un vérin à vis réglable (33) qui permet de régler la profondeur de travail des outils.

11. Appareil à outils rotatifs pour le travail du sol, selon l'une quelconque des revendications 1 à 10, caractérisé en ce qu'il comporte, à l'entrée des panneaux latéraux (4) dans leur partie basse, un sabot d'usure (28) disposé sur le champ desdits panneaux (4) et qui s'étend de la partie basse desdits panneaux jusqu'à un niveau qui correspond sensiblement à celui de l'axe (8) de l'outil de fraisage (6).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2121868 (VAN DER LELY N.V.)<br>* le document en entier * | 1, 2, 3 | A01B33/08<br>A01B33/02 |
| A | FR-A-2222927 (VAN DER LELY N.V.)<br>* page 10, ligne 37 - page 11, ligne 1; figures 13, 14 * | 4, 5, 6, 7 | |
| A | FR-A-2035170 (AGRATOR INDUSTRIAL. S.L.)<br>* figures 3, 4 * | 8, 11 | |
| A | FR-A-1474647 (VISSERS)<br>* page 2, colonne de droite, alinéa 6; figure 4 * | 1, 2 | |
| A | US-A-3990519 (ERNST)<br>* colonne 2, ligne 58 - colonne 3, ligne 42; figures 1, 5-7 * | 1, 2, 3, 9, 10 | |

**DOMAINES TECHNIQUES RECHERCHES (Int. Cl.5)**

A01B

Le présent rapport a été établi pour toutes les revendications

| Lieu de la recherche | Date d'achèvement de la recherche | Examinateur |
|---|---|---|
| LA HAYE | 09 OCTOBRE 1990 | VERDOODT S.J.M. |

EPO FORM 1503 03.82 (P0402)